(19) Europäisches Patentamt
European Patent Office
Office européen des brevets

(11) **EP 2 743 483 A1**

(12) **DEMANDE DE BREVET EUROPEEN**

(43) Date de publication:
**18.06.2014 Bulletin 2014/25**

(51) Int Cl.:
*F02D 41/00* (2006.01)    *F02D 13/02* (2006.01)

(21) Numéro de dépôt: **13306662.1**

(22) Date de dépôt: **04.12.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **14.12.2012 FR 1203422**

(71) Demandeurs:
• **IFP Energies nouvelles**
**92852 Rueil Malmaison Cedex (FR)**

• **Valeo**
**95892 Cergy Pontoise Cedex (FR)**

(72) Inventeurs:
• **Leroy, Thomas**
**78100 Saint Germain en Laye (FR)**
• **Chauvin, Jonathan**
**75017 Paris (FR)**

(54) **Procédé de contrôle d'un moteur comprenant un cylindre équipé d'une soupape d'admission entrainée par un actionneur sans came**

(57) L'invention concerne un procédé de contrôle de moteur avec un cylindre (1) équipé d'une soupape d'admission (2) entraînée par un actionneur non directement actionné par une came (3). Pour ce procédé, on contrôle l'actionneur non directement actionné par une came (3) de manière à l'utiliser comme un actionneur actif pendant les transitoires. Pour cela, le procédé selon l'invention repose sur l'utilisation d'un modèle de remplissage et de son inverse pour déterminer une consigne d'angle de fermeture $\theta_{ivc}^{coord}$ de la soupape d'admission (2), de façon à coordonner le contrôle de la pression d'admission et le contrôle de l'actionneur non directement actionné par une came (3).

**Figure 1**

**Description**

La présente invention concerne le domaine du contrôle des moteurs thermiques, en particulier des moteurs thermiques équipés d'actionneurs non directement actionné par une came pour l'entraînement des soupapes d'admission.

L'industrie automobile doit faire face à une réglementation anti-pollution toujours plus sévère (EURO V et VI) tout en assurant une réduction des émissions de $CO_2$ conforme aux engagements pris par l'Association des Constructeurs Européens d'Automobiles (ACEA), soit une moyenne de 130 g/km par constructeur à échéance 2012/15. Par comparaison au moteur diesel, le moteur à allumage commandé souffre d'un handicap sérieux sur le plan de la consommation en carburant et donc des émissions de $CO_2$. Cependant, ce moteur présente des atouts indéniables en termes de dépollution du fait des performances de la catalyse 3-voies. Il est donc de première importance de dégager les pistes conduisant à une réduction des émissions de $CO_2$ du moteur à allumage commandé. Un des objectifs de l'industrie automobile est donc de concevoir un moteur à essence dont les émissions de $CO_2$ sont équivalentes à celles d'un moteur diesel.

Pour atteindre cet objectif, une architecture d'un moteur à essence suralimenté (injection indirecte), équipé d'un système d'actionneurs non directement actionné par une came pour commander les soupapes d'admission a été développé. Ces actionneurs peuvent être par exemple du type électromagnétique, pneumatique ou hydraulique. Ce type d'actionneur non directement actionné par une came est dit "sans came", ou "Camless" en anglais. Pour ce moteur, une désactivation de cylindre, facilitée par la présence de l'actionneur "Camless", est également permise.

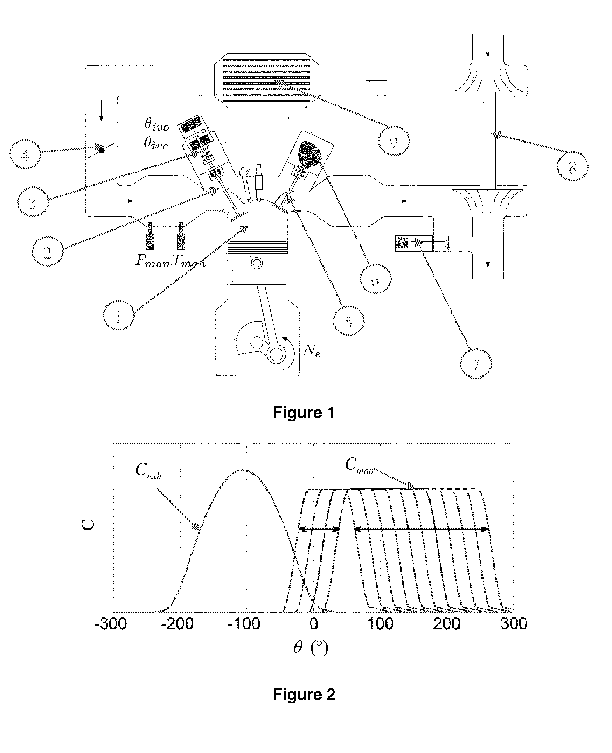

Le schéma d'un moteur équipé d'un tel actionneur est donné sur la figure 1. Cette figure représente un cylindre (1) équipé d'une soupape d'admission (2) et d'une soupape d'échappement (5). Pour cet exemple, la soupape d'admission est entraînée par un actionneur non directement actionné par une came de type électromagnétique (3) et la soupape d'échappement (5) par une came (6). Par conséquent, pour ce moteur, quatre actionneurs composent la boucle d'air : le papillon (4), la soupape de décharge (7) (en anglais wastegate), l'actionneur "Camless" (3) et la désactivation de soupape échappement (5) sur 2 des 4 cylindres (cette dernière n'est pas représentée sur la figure). L'actionneur électromagnétique (3) permet la modification des instants d'ouverture et de fermeture de la soupape admission (2). Par ailleurs, sur cette figure, on a représenté un turbocompresseur (8) et un refroidisseur à air suralimenté (9), ces dispositifs n'ont pas de lien avec l'actionneur "Camless" utilisé. La figure 2 présente une loi de levée (fixe) des soupapes échappement $(C_{exh})$ ainsi que les lois de levée des soupapes admission $(C_{man})$ avec variation de l'étalement et du phasage en fonction de l'angle de vilebrequin $(\theta)$. Le dispositif "Camless" permet de modifier la loi de levée des soupapes admission, telle que montré sur la figure 2. Cette modification de la loi de levée des soupapes d'admission permet de réduire les pertes par pompage du moteur en permettant un fonctionnement en cycle de Miller et ainsi de réduire la consommation.

Dans un moteur à essence, la charge est directement liée à la quantité d'air présente dans les cylindres (considérant une régulation de richesse à la stoechiométrie et un contrôle d'avance). De ce fait, contrôler le couple revient à contrôler la masse d'air aspiré dans les cylindres (1). Pour les moteurs à distribution fixe, cela revient à piloter la pression admission, notamment en actionnant la vanne papillon (4) et la soupape de décharge (7). Sur les moteurs à distribution variable, la masse d'air aspirée dépend également des lois de levée de l'admission et de l'échappement. Dans le cas d'un moteur tel que celui illustré en figure 1, la masse d'air est fonction de la pression d'admission d'une part et des instants d'ouverture et de fermeture de la soupape d'admission d'autre part. Ces deux grandeurs agissant sur le remplissage ont des temps de réponse différents. En effet, alors que la pression admission, dans la zone de suralimentation, est lente du fait de l'inertie du turbocompresseur (8), la loi de distribution, elle, peut être modifiée d'un cycle à l'autre.

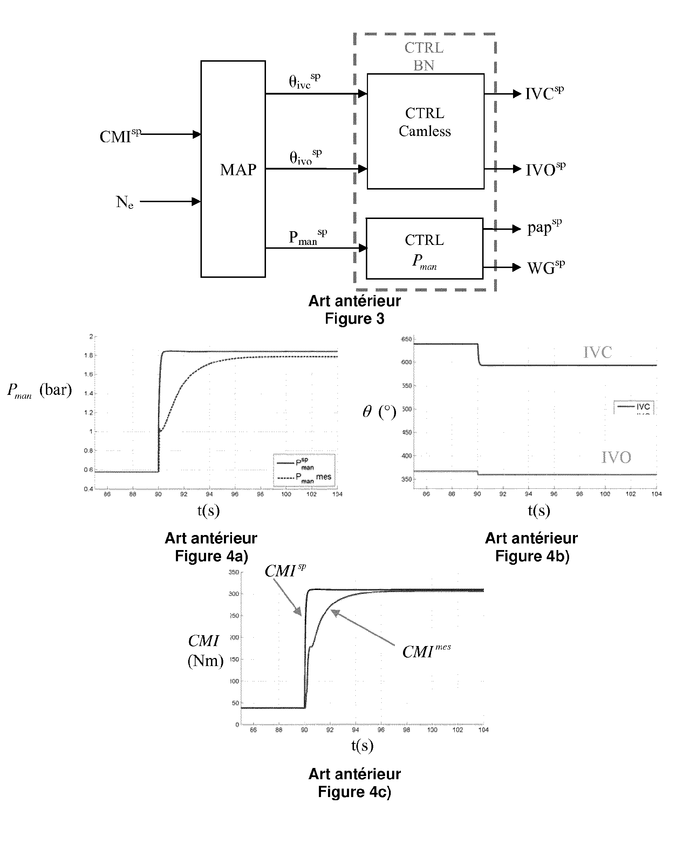

Classiquement, les actionneurs de distribution variable sont positionnés de façon à optimiser la consommation. Ainsi, la consigne de pression admission ainsi que les instants d'ouverture et de fermeture de la soupape d'admission sont cartographiés pour chaque point de fonctionnement moteur (régime-couple). En d'autres termes, à partir d'une demande de couple provenant de la pédale d'accélération et du régime, des cartographies définissent les objectifs en pression admission et distribution. La figure 3 illustre une stratégie de contrôle selon l'art antérieur. Selon ce contrôle de l'art antérieur, on acquiert une consigne de couple moyen indiqué $CMI^{sp}$ et au moyen de cartographies (MAP) connaissant le régime moteur $N_e$, on détermine des consignes d'angle d'ouverture $\theta_{ivo}^{sp}$, d'angle de fermeture $\theta_{ivc}^{sp}$ de la soupape d'admission et une consigne de pression d'admission $P_{man}^{sp}$. Ces consignes sont des entrées d'un contrôleur (CTRL BN) bas niveau : on contrôle les actionneurs non directement actionné par une came (CTRL Camless) et la pression (CTRL $P_{man}$). En sortie de ces contrôleurs bas niveau, on obtient donc d'une part des consignes d'ouverture $IVO^{sp}$ et de fermeture $IVC^{sp}$ de la soupape d'admission et d'autre part des consignes de commande de la vanne papillon $pap^{sp}$ et de la soupape de décharge $WG^{sp}$.

Selon cet art antérieur, L'IVO est positionné proche du point mort haut, de façon à limiter la présence de gaz brulés dans la chambre de combustion. L'IVC est positionné de façon à limiter les pertes par pompage, la fermeture est la plus tardive possible (saturée à 640 degrés).

Dans des conditions de fonctionnement stabilisées, la stratégie décrite précédemment est optimale. Cependant, le moteur fonctionne rarement dans ces conditions. Les sous-systèmes (contrôle de pression admission et contrôle de la distribution variable) possèdent des temps de réponse assez différents. La dynamique de pression, elle, est plutôt lente à bas régime (à cause de l'inertie du turbocompresseur), tandis que l'actionneur "Camless" est pilotable cycle à cycle. Les figures 4a) à 4c) présentent un transitoire de couple à 2000 tr/min pour la pression d'admission, les angles d'ouverture et de fermeture de la soupape d'admission et pour le couple indiqué. La pression $P_{man}$ est lente à converger alors que l'actionneur "Camless" positionne immédiatement les ouvertures $\theta_{ivo}$ et fermeture $\theta_{ivc}$ de la soupape d'admission. La réponse en couple (CMI : Couple Moyen Indiqué) est impactée par la lenteur de la pression admission. Ici, l'actionneur "Camless" n'est pas positionné de façon optimal puisqu'il reste sur sa position de référence pendant le transitoire. Il est utilisé comme un actionneur passif. Ainsi, le contrôle du moteur n'est pas optimal pendant les transitoires.

Pour améliorer la gestion des transitoires, l'invention concerne un procédé de contrôle de moteur avec un cylindre équipé d'une soupape d'admission entraînée par un actionneur "Camless". Pour ce procédé, on contrôle l'actionneur "Camless" de manière à l'utiliser comme un actionneur actif pendant les transitoires. Pour cela, le procédé selon l'invention repose sur l'utilisation d'un modèle de remplissage et de son inverse pour déterminer une consigne d'angle de fermeture de la soupape d'admission, de façon à coordonner les deux sous-systèmes (contrôle de la pression d'admission et contrôle de l'actionneur "Camless") pour améliorer la réponse en masse d'air. De cette façon, le remplissage et donc le couple sont accélérés durant les transitoires.

**Le procédé selon l'invention**

L'invention concerne un procédé de contrôle d'un moteur thermique comportant au moins un cylindre équipé d'au moins une soupape d'admission entraînée par un actionneur non directement actionné par une came. Pour ce procédé, on réalise les étapes suivantes :

a) on acquiert des consignes d'angle d'ouverture $\theta_{ivo}^{sp}$ et de fermeture $\theta_{ivc}^{sp}$ de ladite soupape d'admission ;

b) on construit un modèle de remplissage dudit cylindre, ledit modèle reliant la masse d'air aspiré $m_{asp}$ par le cylindre à l'angle d'ouverture $\theta_{ivo}$ de ladite soupape d'admission et à l'angle de fermeture $\theta_{ivc}$ de ladite soupape d'admission ;

c) on détermine une consigne masse d'air aspiré $m_{asp}^{sp}$ au moyen dudit modèle de remplissage et desdites consignes d'angles d'ouverture $\theta_{ivo}^{sp}$ et de fermeture $\theta_{ivc}^{sp}$ de ladite soupape d'admission ;

d) on inverse ledit modèle de remplissage de manière à relier ledit angle de fermeture $\theta_{ivc}$ de ladite soupape d'admission à la masse d'air aspiré $m_{asp}$ et audit angle d'ouverture $\theta_{ivo}$ de ladite soupape d'admission ;

e) on détermine une consigne coordonnée de l'angle de fermeture $\theta_{ivc}^{coord}$ de ladite soupape d'admission au moyen dudit modèle de remplissage inversé, de ladite consigne de masse d'air aspiré $m_{asp}^{sp}$ et de ladite consigne d'angle d'ouverture $\theta_{ivo}^{sp}$ de ladite soupape d'admission ; et

f) on contrôle ledit actionneur non directement actionné par une came au moyen de ladite consigne coordonnée $\theta_{ivc}^{coord}$ de fermeture de ladite soupape d'admission et de ladite consigne d'ouverture $\theta_{ivo}^{sp}$ de ladite soupape d'admission.

Selon l'invention, on acquiert lesdites consignes d'angle d'ouverture $\theta_{ivo}^{sp}$ et de fermeture $\theta_{ivc}^{sp}$ de ladite soupape d'admission, en mettant en oeuvre les étapes suivantes :

i) on acquiert une consigne de couple moyen indiqué $CMI^{sp}$ dudit moteur ; et

ii) on détermine lesdites consignes d'angle d'ouverture $\theta_{ivo}^{sp}$ et de fermeture $\theta_{ivc}^{sp}$ de ladite soupape d'admission au moyen de cartographies dudit moteur et de ladite consigne de couple moyen indiqué $CMI^{sp}$.

Avantageusement, on construit ledit modèle de remplissage au moyen d'une relation du type :

$$m_{asp}^{sp} = \alpha_1(N_e, P_{man}^{sp}) \frac{P_{man}^{sp}}{R \cdot T_{man}} V_{cyl}(\theta_{ivc}^{sp} - \delta_{ivc}(N_e)) - \alpha_2(N_e, P_{man}^{sp}) OF(N_e, \theta_{ivo}^{sp})$$ avec R la constante des gaz parfaits, $V_{cyl}(\theta)$ le volume du cylindre pour un angle de vilebrequin $\theta$, $OF$ le facteur de croisement, $\delta_{ivc}(N_e)$ un terme additif fonction du régime moteur $N_e$ pour la prise en compte de phénomènes physiques, $P_{man}^{sp}$ la consigne de pression d'admission, $T_{man}$ la température d'admission et $\alpha_1, \alpha_2$ des paramètres de calibration.

De préférence, ladite consigne $P_{man}^{sp}$ de pression d'admission est déterminée au moyen d'une cartographie fonction de ladite consigne de couple moyen indiqué $CMI^{sp}$.

En outre, on peut contrôler ladite pression d'admission au moyen de ladite consigne $P_{man}^{sp}$ en contrôlant une vanne papillon équipant le circuit d'admission dudit moteur et/ou une soupape de décharge équipant le circuit d'échappement dudit moteur.

Selon l'invention, lesdits paramètres de calibration $\alpha_1, \alpha_2$ et/ou ledit terme additif $\delta_{ivc}(N_e)$ sont déterminés au moyen de mesures expérimentales.

De manière avantageuse, lesdits paramètres de calibration $\alpha_1, \alpha_2$ sont déterminés au moyen d'une régression linéaire à partir desdites mesures expérimentales.

De manière préférentielle, ledit terme additif $\delta_{ivc}(N_e)$ est déterminé au moyen d'une optimisation non-linéaire à partir desdites mesures expérimentales.

Le volume du cylindre peut être défini par une relation du type :

$$V_{cyl}(\theta) = V_{\min} + \frac{1}{2} V_{\min} \cdot (\varepsilon - 1) \cdot \left( R_{bm} + 1 - \cos(\theta) - \sqrt{R_{bm}^2 - \sin^2(\theta)} \right)$$ avec $\theta$ l'angle du vilebrequin,

$V_{min}$ le volume mort, $R_{bm}$ le rapport bielle sur manivelle et $\varepsilon$ le taux de compression.

Selon un mode de réalisation de l'invention, on construit l'inversion dudit modèle de remplissage au moyen d'un système d'équations du type :

$$\begin{cases} \theta_{ivc}^{coord} = \arccos(X) \cdot \dfrac{180}{\pi} + 360 + \delta_{ivc}(N_e) \\ \theta_{ivc}^{coord} = 720 - \arccos(X) \cdot \dfrac{180}{\pi} + \delta_{ivc}(N_e) \end{cases}, \qquad \text{avec :} \qquad X = \frac{R_{bm}^2 - 1 - \lambda^2}{2\lambda},$$

$$\lambda = \left( \frac{V_{cyl}^{sp}}{V_{\min}} - 1 \right) \cdot \frac{2}{\varepsilon - 1} - R_{bm} - 1, \qquad V_{cyl}^{sp} = \frac{R \cdot T_{man}}{\alpha_1(N_e, P_{man}) \cdot P_{man}} \left( m_{asp}^{sp} + \alpha_2(N_e, P_{man}) OF(N_e, \theta_{ivo}^{sp}) \right)$$ et

$P_{man}$ étant la pression d'admission mesurée, la première équation de ce système d'équations déterminant une consigne coordonnée $\theta_{ivc}^{coord}$ pour une fermeture de ladite soupape d'admission avant le point mort bas, la deuxième équation de ce système d'équations déterminant une consigne coordonnée $\theta_{ivc}^{coord}$ pour une fermeture de ladite soupape d'admission après le point mort bas.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre un moteur équipé d'un actionneur électromagnétique entraînant une soupape d'admission.
La figure 2, déjà décrite, représente les lois de levée des soupapes d'admission et d'échappement pour le moteur illustré en figure 1.
La figure 3, déjà décrite, représente une méthode de contrôle d'un moteur selon l'art antérieur.
Les figures 4a) à 4c), déjà décrites, illustrent la pression d'admission, les angles d'ouverture et de fermeture de la soupape d'admission et le couple indiqué pour un transitoire de charge à 2000 tr/min pour la méthode de l'art antérieur.

La figure 5a) illustre l'impact du régime sur le temps d'ouverture de la soupape d'admission. La figure 5b) illustre l'impact du moment d'ouverture de la soupape d'admission et du régime sur le facteur de croisement utilisé dans le modèle de remplissage selon l'invention.

La figure 6 représente le rendement volumétrique $\eta_{vol}$ en fonction de l'angle de fermeture $\theta_{ivc}$ de la soupape d'admission pour différents régimes du moteur : 2000, 3000, 4000 et 5000 et 6000 tr/min.

La figure 7 représente le rendement volumétrique $\eta_{vol}$ en fonction de l'angle de fermeture $\theta_{ivc}$ de la soupape d'admission pour un cylindre équipé d'une seule soupape d'admission (1 s) et pour un cylindre équipé de deux soupapes d'admission (2s).

Les figures 8a) à 8d) illustrent l'erreur relative entre le modèle de remplissage selon l'invention et des mesures expérimentales pour quatre configurations de moteur : 1 soupape / 2 cylindres, 2 soupapes / 2 cylindres, 1 soupape / 4 cylindres et 2 soupapes / 4 cylindres.

La figure 9 représente la loi de levée des soupapes d'admission et d'échappement.

La figure 10 représente le procédé de contrôle selon un mode de réalisation de l'invention.

Les figures 11a) à 11d) illustrent des résultats sur une forte prise de charge à 2000 tr/min pour le procédé selon l'invention en termes de couple moyen indiqué, de masse d'air aspiré, de pression d'admission et d'angle de fermeture de la soupape d'admission.

Les figures 12a) à 12d) illustrent des résultats sur une forte prise de charge à 4000 tr/min pour le procédé selon l'invention en termes de couple moyen indiqué, de masse d'air aspiré, de pression d'admission et d'angle de fermeture de la soupape d'admission.

Les figures 13a) à 13d) illustrent des résultats sur un transitoire de véhicule 80 à 120 km/h en 6ème pour le procédé selon l'invention en termes de couple moyen indiqué, de masse d'air aspiré, de pression d'admission et d'angle de fermeture de la soupape d'admission.

Les figures 14a) à 14 f) représentent des résultats sur une accélération de 0 à 100 km/h pour le procédé selon l'invention en termes de vitesse du véhicule, du régime moteur, de couple moyen indiqué, de masse d'air aspiré, de pression d'admission et d'angle de fermeture de la soupape d'admission.

## Description détaillée de l'invention

L'invention concerne un procédé de contrôle d'un moteur comportant au moins un cylindre avec au moins une soupape d'admission entraînée par un actionneur non directement actionné par une came (actionneur "Camless"). Un actionneur non directement actionné par une came peut être un actionneur électromagnétique ou un actionneur pneumatique ou un actionneur hydraulique. Il peut s'agir d'un moteur tel qu'illustré en figure 1. Le procédé selon l'invention contrôle l'actionneur non directement actionné par une came de manière à piloter la soupape d'admission pour atteindre le couple attendu. Le procédé se base sur la construction d'un modèle de remplissage du cylindre et de son inverse.

On appelle modèle de remplissage du cylindre un modèle illustrant les phénomènes physiques mis en jeu lors du remplissage en air du cylindre. Ce modèle permet donc d'estimer la masse d'air entrant dans le cylindre. Ce modèle dépend notamment de l'ouverture et la fermeture des soupapes d'admission et d'échappement. Il peut dépendre également des pressions et des températures à l'admission et à l'échappement, et du régime du moteur.

L'inverse d'un tel modèle de remplissage permet d'estimer l'angle de fermeture de la soupape d'admission. Le modèle inverse dépend alors de la masse d'air entrant dans le cylindre et de l'angle d'ouverture de la soupape d'admission. Il peut dépendre également des pressions et températures à l'admission et à l'échappement, et du régime moteur.

Notations

Au cours de la description, les notations suivantes sont utilisées :

- $P_{mam}$ : pression à l'admission du cylindre (en Pa). Tel que représenté en figure 1, cette pression peut être mesurée au moyen d'un capteur de pression placé dans le collecteur d'admission.
- $T_{mam}$ : température à l'admission du cylindre (en K). Tel que représenté en figure 1, cette température peut être mesurée au moyen d'un capteur de température placé dans le collecteur d'admission.
- $m_{asp}$ : masse d'air aspiré (en kg).
- $N_e$ : régime du moteur (en tr/min).
- $P_{exh}$ : pression échappement (en Pa).
- $T_{exh}$ : température échappement (en K).
- $R$ : constante des gaz parfaits (en J/kg/K), qui est la même pour tous les gaz concernés ici (air et gaz d'échappement), et qui vaut 288 J/kg/K.
- $V_{cyl}(\theta)$ : volume cylindre (1) à l'angle $\theta$ (en m$^3$).

- $V_{min}$: le volume mort (en m3), il s'agit du volume dans le cylindre quand le piston est au point mort haut.
- $R_{bm}$ : le rapport bielle sur manivelle.
- $\varepsilon$ : le taux de compression.
- $\theta_{ivo}$ : angle d'ouverture de la soupape admission (en °). Cet angle est déterminé en fonction de l'actionneur non directement actionné par une came (3).
- $\theta_{ivc}$ : angle de fermeture de la soupape admission (en °). Cet angle est déterminé en fonction de l'actionneur non directement actionné par une came (3).
- $\theta_{evc}$ : angle de fermeture de la soupape échappement (5) (en °). Cet angle dépend de la came (6) d'actionnement de la soupape d'échappement (5).
- $\Psi(\cdot)$ : débit d'air passant à travers la soupape d'admission et échappement durant la période de croisement (ou overlap en anglais), c'est à dire quand elles sont ouvertes en même temps (en kg/s). Le débit peut être positif ou négatif (dépend de la différence de pression admission/échappement).
- $OF(\cdot)$ : facteur de croisement (en m2.°). Il représente l'aire sous les soupapes admission et échappement lorsqu'elles sont ouvertes en même temps.
- $\alpha_1, \alpha_2, \alpha_3$ : paramètres de calibration.
- $\delta_{ivc}$ : terme additif permettant de prendre en compte certains phénomènes physiques dans le modèle de remplissage (en °).
- C : course (ou levée) des soupapes d'échappement (5) ou d'admission (2) (en mm).
- X : paramètre du modèle inverse.
- $\lambda$ : paramètre du modèle inverse.
- CMI : couple moyen indiqué (en Nm), il s'agit du couple fourni par le moteur, qui ne comprend pas les pertes pas frottement.

Ces notations, indexées par la mention -$^{sp}$, représentent les consignes. La mention -$^{ref}$ indique les valeurs de référence mesurées expérimentalement pour la méthode selon l'art antérieur décrite en introduction. La mention -$^{est}$ indique les valeurs estimées par le modèle de remplissage selon l'invention. La mention -$^{inv}$ indique les valeurs obtenues avec le procédé selon l'invention.

Pour le procédé selon l'invention, on met en oeuvre les étapes suivantes :

1) acquisition des consignes
2) construction du modèle de remplissage
3) détermination d'une consigne de masse d'air aspiré
4) inversion du modèle de remplissage
5) détermination d'une consigne coordonnée d'angle de fermeture de la soupape d'admission
6) contrôle du moteur

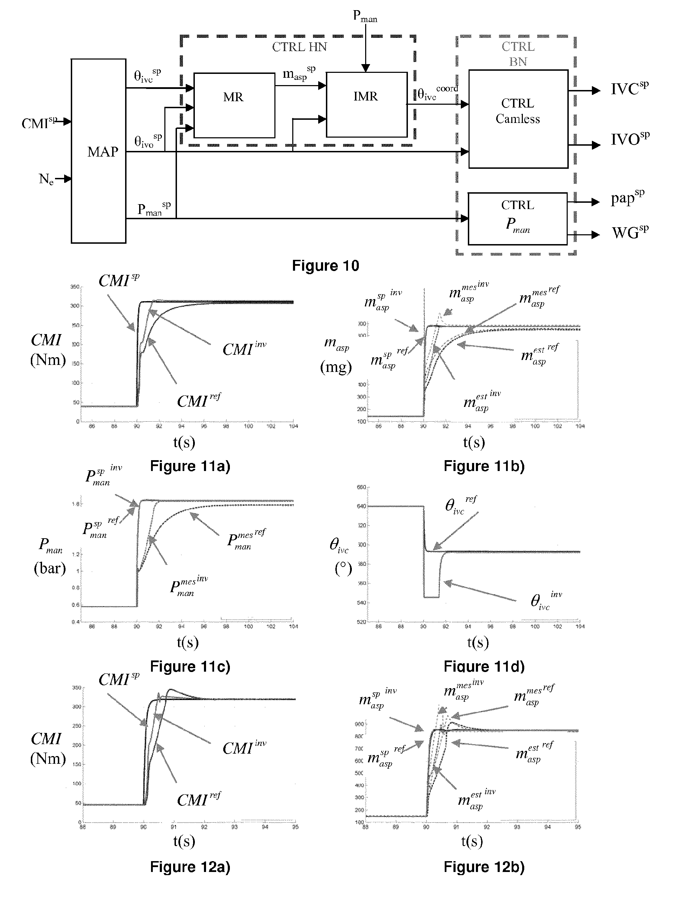

La figure 10 illustre les étapes du procédé selon un mode de réalisation de l'invention. La principale différence entre ce mode de réalisation et la méthode selon l'art antérieur décrit en relation avec la figure 3, est l'utilisation d'un contrôleur de haut niveau (CTRL HN) basé sur l'utilisation d'un modèle de remplissage (MR) et de son inversion (IMR). Le modèle de remplissage (MR) permet de calculer une consigne de masse d'air aspiré $m_{asp}^{sp}$ , alors que l'inverse du modèle de remplissage (IMR) permet de déterminer une consigne coordonnée $\theta_{ivc}^{coord}$ d'angle de fermeture de la soupape d'admission. Cette figure sera décrite plus en détail en relation avec la description détaillée des étapes du procédé.

1) acquisition des consignes

Lors de cette étape, on acquiert des consignes d'angle d'ouverture $\theta_{ivo}^{sp}$ et de fermeture $\theta_{ivc}^{sp}$ de ladite soupape d'admission (2). Ces consignes sont déterminées de manière à atteindre le fonctionnement du moteur attendu par l'utilisateur, notamment en termes de couple.

De préférence, tel qu'illustré selon le mode de réalisation de la figure 10, on détermine ces consignes au moyen de cartographies (MAP) à partir d'une consigne de couple moyen indiqué $CMI^{sp}$ déterminée en fonction de la demande du conducteur via la pédale d'accélération et à partir du régime du moteur $N_e$.

Selon un mode de réalisation non illustré, les consignes d'angle d'ouverture $\theta_{ivo}^{sp}$ et de fermeture $\theta_{ivc}^{sp}$ de ladite soupape d'admission (2), ainsi que la consigne de pression d'admission, $P_{mam}^{sp}$, sont déterminées directement en fonction de la demande de couple et du régime.

2) construction du modèle de remplissage

Lors de cette étape, on construit un modèle de remplissage du cylindre. À partir des conditions extérieures aux cylindres (conditions thermodynamiques dans le répartiteur admission, distribution...), le modèle de remplissage permet d'estimer la quantité d'air aspirée dans les cylindres. Dans l'application "Camless", en plus d'être représentatif vis-à-vis de l'impact de la distribution sur le remplissage, le modèle doit être valable pour toutes les configurations du système d'air (une ou deux soupapes admission, deux ou quatre cylindres).

Le modèle de remplissage est construit en fonction de relations simples de la thermodynamique, de données géométriques de la chambre de combustion ainsi que des lois de levée des soupapes d'admission et d'échappement. La masse d'air aspirée dans le cylindre à chaque cycle peut être donnée par une formule du type :

$$m_{asp} = \alpha_1 \frac{P_{man}}{R \cdot T_{man}} V_{cyl}(\theta_{ivc}) - \alpha_2 \Psi(P_{man}, P_{exh}, T_{man}, T_{exh}) \frac{OF(\theta_{ivo}, \theta_{evc})}{N_e} \frac{T_{exh}}{T_{man}} - \alpha_3 \frac{P_{exh} V_{cyl}(\theta_{evc})}{R \cdot T_{man}}$$

Selon l'invention, dans l'application "Camless", les mesures de pression et de température à l'échappement ne sont pas disponibles. De plus, le terme $\theta_{evc}$ est fixe (la levée échappement est fixe). Ceci permet dans un premier temps de simplifier la formule suivante, et le modèle de remplissage peut être simplifié dans un premier temps par une formule du type :

$$m_{asp} = \alpha_1(N_e, P_{man}) \frac{P_{man}}{R \cdot T_{man}} V_{cyl}(\theta_{ivc}) - \alpha_2(N_e, P_{man}) \frac{OF(N_e, \theta_{ivo})}{N_e}$$

Ainsi, le troisième terme de l'expression disparaît. La fonction $\Psi$ est incluse dans le paramètre de calibration $\alpha_2$. Il est à noter que les paramètres de calibration $\alpha_1$ et $\alpha_2$ peuvent être cartographiés en fonction du régime et de la pression d'admission suite à des mesures expérimentales sur banc d'essai (comme pour le rendement volumétrique dans un moteur à distribution fixe). Pour le procédé selon l'invention, on détermine $\theta_{ivo}$ et $\theta_{ivc}$ en fonction de la commande de l'actionneur non directement actionné par une came (3). Alternativement et/ou simultanément, on peut utiliser un capteur de position.

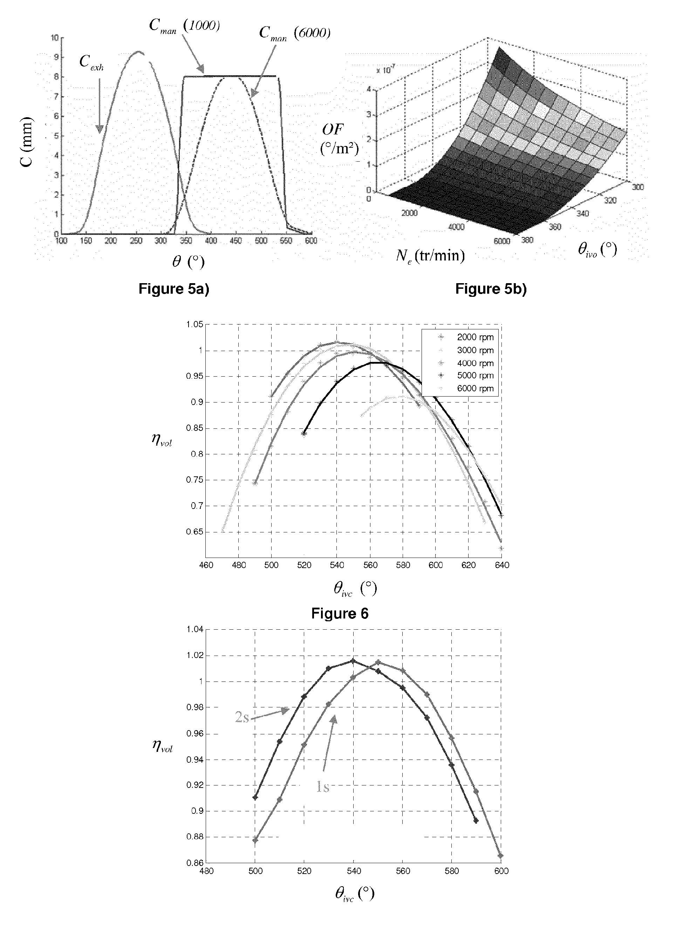

Le facteur de croisement OF (ou fonction d'overlap) n'est pas fonction du moment de fermeture de la soupape échappement (fixe) mais du régime (puisque la levée de la soupape admission dépend du régime), voir figures 5. La figure 5a) montre la levée C des soupapes d'admission $C_{man}$ et d'échappement $C_{exh}$ en fonction de l'angle du vilebrequin. Pour la soupape d'admission, on a considéré deux régimes du moteur : 1000 et 6000 tr/min. On distingue bien la dépendance de la levée de la soupape d'admission en fonction du régime. La figure 5b) montre quant à elle les variations du facteur de croisement en fonction du régime et de l'angle d'ouverture de la soupape d'admission.

Il peut donc être intéressant de prendre en compte ces effets inertiels dans la modélisation du remplissage. La figure 6 représente le rendement volumétrique $\eta_{vol}$ en fonction de l'angle de fermeture de la soupape d'admission pour différents régimes pour une même pression d'admission de 1,75 bar. Sur cette figure, on utilise l'unité anglo-saxone rpm (pour révolutions per minutes) qui correspond à l'unité tr/min. À 2000 tr/min, le remplissage est maximal pour un IVC à 540 degrés, correspondant au PMB (Point Mort Bas) moteur. Lorsque le régime augmente, le remplissage maximal se déplace vers les fermetures tardives. Ceci s'explique par l'inertie de la colonne des gaz qui devient de plus en plus importante.

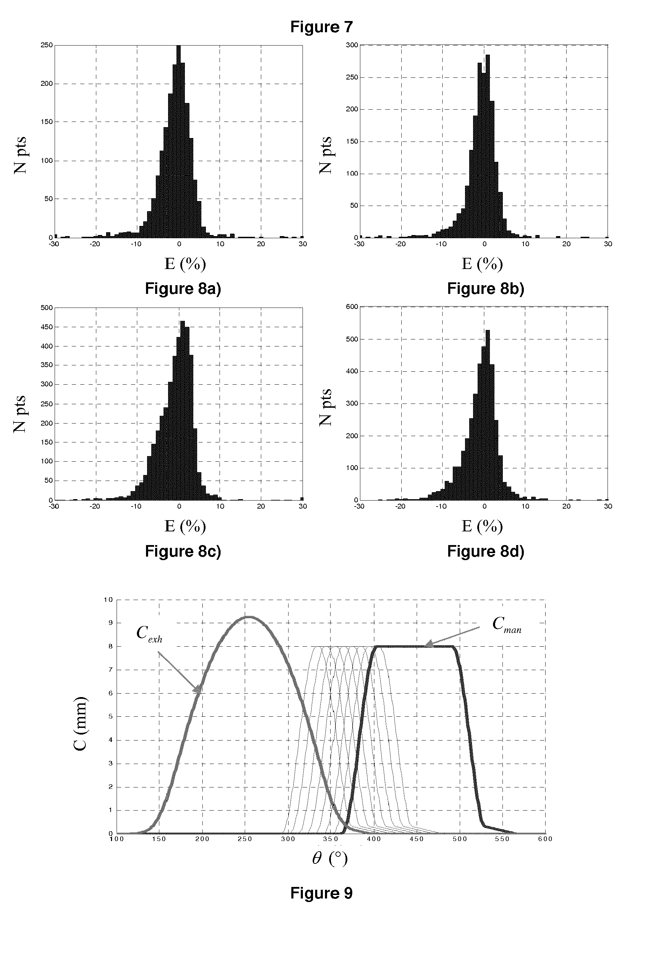

De même, la figure 7 représente l'impact du nombre de soupapes d'admission sur le remplissage. Pour cette figure 7, on étudie le cas une soupape (1s) et le cas deux soupapes (2s) à iso-régime (2000 tr/min) et iso-pression d'admission (1,75 bar). On constate que la vitesse des gaz est plus importante lorsqu'une seule soupape d'admission s'ouvre, il s'ensuit un décalage vers les fermetures tardives dans la courbe de remplissage.

Pour prendre en compte ces effets liés notamment au régime du moteur et au nombre de soupapes d'admission, on peut construire le modèle de remplissage selon l'invention en prenant en compte un terme additif $\delta_{ivc}$ qui est fonction du régime. Ce terme additif $\delta_{ivc}$ est utilisé dans le calcul du volume du cylindre au moment de la fermeture de la soupape d'admission. Selon cette variante de réalisation, le modèle de remplissage peut s'écrire :

$$m_{asp} = \alpha_1(N_e, P_{man})\frac{P_{man}}{R \cdot T_{man}}V_{cyl}(\theta_{ivc} - \delta_{ivc}(N_e)) - \alpha_2(N_e, P_{man})OF(N_e, \theta_{ivo}) \,.$$

Les paramètres de calibration $\alpha_1$, $\alpha_2$ et $\delta_{ivc}$ sont optimisés pour chaque configuration moteur, notamment par des mesures expérimentales réalisées au banc moteur. A partir de ces mesures expérimentales, les paramètres de calibration $\alpha_1$, $\alpha_2$ peuvent être obtenues grâce à une régression linéaire, alors que le terme additif $\delta_{ivc}$ peut être le résultat d'une optimisation non-linéaire.

Pour ce modèle de remplissage selon l'invention, le volume du cylindre $V_{cyl}$ à l'angle $\theta$ peut être défini par une formule géométrique du type :

$$V_{cyl}(\theta) = V_{min} + \frac{1}{2}V_{min} \cdot (\varepsilon - 1) \cdot \left( R_{bm} + 1 - \cos(\theta) - \sqrt{R_{bm}^2 - \sin^2(\theta)} \right).$$

3) détermination d'une consigne de masse d'air aspiré

Au moyen du modèle de remplissage tel que défini ci-dessus, et des consignes d'angle d'ouverture $\theta_{ivo}^{sp}$ et de fermeture $\theta_{ivc}^{sp}$ de ladite soupape d'admission (2) acquises lors de l'étape 1), on détermine une consigne de masse d'air aspiré $m_{asp}^{sp}$.

Selon l'invention, la consigne de masse d'air aspiré $m_{asp}^{sp}$ est déterminée au moyen d'une formule du type :

$$m_{asp}^{sp} = \alpha_1(N_e, P_{man}^{sp})\frac{P_{man}^{sp}}{R \cdot T_{man}}V_{cyl}(\theta_{ivc}^{sp} - \delta_{ivc}(N_e)) - \alpha_2(N_e, P_{man}^{sp})OF(N_e, \theta_{ivo}^{sp})$$

avec $P_{man}^{sp}$ la consigne de pression d'admission.

Selon le mode de réalisation de la figure 10, $P_{man}^{sp}$ est déterminé au moyen de cartographies (MAP) à partir d'une consigne de couple moyen indiqué *CMIsp* déterminée en fonction de la commande du moteur et à partir du régime du moteur $N_e$.

4) inversion du modèle de remplissage

Le procédé selon l'invention permet de déterminer une coordination des angles de fermeture et d'ouverture basée sur l'inversion du modèle de remplissage. Pour prendre en compte la lenteur du sous-système pression admission, les deux sous-systèmes sont coordonnés en remplaçant l'objectif de pression admission $P_{man}^{sp}$ par sa mesure $P_{man}$.

L'inversion du modèle de remplissage peut s'effectuer analytiquement. En écrivant $\theta_{ivc}^{coord}$ la nouvelle commande pour l'IVC, on peut écrire :

$$V_{cyl}\left(\theta_{ivc}^{coord} - \delta_{ivc}(N_e)\right) = \frac{R \cdot T_{man}}{\alpha_1(N_e, P_{man}) \cdot P_{man}}\left(m_{asp}^{sp} + \alpha_2(N_e, P_{man})OF(N_e, \theta_{ivo}^{sp})\right)$$

Ensuite on inverse la fonction $V_{cyl}$. On pose alors:

$$V_{cyl}^{sp} = \frac{R \cdot T_{man}}{\alpha_1(N_e, P_{man}) \cdot P_{man}} \left( m_{asp}^{sp} + \alpha_2(N_e, P_{man}) OF(N_e, \theta_{ivo}^{sp}) \right).$$ En utilisant l'expression du volume cylindre, on peut écrire :

$$-\cos\left(\theta_{ivc}^{coord} - \delta_{ivc}(N_e)\right) - \sqrt{R_{bm}^2 - \sin\left(\theta_{ivc}^{coord} - \delta_{ivc}(N_e)\right)^2} = \left(\frac{V_{cyl}^{sp}}{V_{min}} - 1\right) \cdot \frac{2}{\varepsilon - 1} - R_{bm} - 1$$

En posant $X = \cos(\theta_{ivc}^{coord} - \delta_{ivc}(N_e))$ et $\lambda = \left(\dfrac{V_{cyl}^{sp}}{V_{min}} - 1\right) \cdot \dfrac{2}{\varepsilon - 1} - R_{bm} - 1$, cela revient à résoudre l'équation suivante : $- X - \sqrt{R_{bm}^2 - 1 + X^2} = \lambda$

Après élévation au carré, on peut donc écrire : $X = \dfrac{R_{bm}^2 - 1 - \lambda^2}{2\lambda}$

Deux solutions sont physiquement possibles dans la résolution de cette équation. Elles correspondent au cas de fermeture précoce, c'est-à-dire avant le point mort bas (PMB) ou au cas de fermeture tardif, c'est-à-dire après le point mort bas (PMB) :

$$\begin{cases} \theta_{ivc}^{coord} = \arccos(X) \cdot \dfrac{180}{\pi} + 360 + \delta_{ivc}(N_e) & (précoce) \\[3mm] \theta_{ivc}^{coord} = 720 - \arccos(X) \cdot \dfrac{180}{\pi} + \delta_{ivc}(N_e) & (tardif) \end{cases}.$$

Ces équations correspondent à un mode de réalisation selon l'invention du modèle de remplissage inversé. Le choix d'une fermeture précoce ou tardive est défini selon le mode de fonctionnement choisi pour le moteur.

5) détermination d'une consigne coordonnée d'angle de fermeture de la soupape d'admission

Pour déterminer la consigne coordonnée $\theta_{ivc}^{coord}$ d'angle de fermeture de la soupape d'admission, on applique un modèle de remplissage inverse tel que celui défini ci-dessus au moyen de la consigne de masse d'air $m_{asp}^{sp}$ déterminée précédemment, la consigne d'angle d'ouverture $\theta_{ivo}^{sp}$ de la soupape d'admission et d'une mesure de la pression d'admission $P_{man}$.

6) contrôle du moteur

On contrôle le fonctionnement du moteur en appliquant la consigne coordonnée $\theta_{ivc}^{coord}$ d'angle de fermeture de la soupape d'admission. Pour cela, on contrôle l'actionneur non directement actionné par une came en fonction de cette consigne. Ainsi, au moyen de ce contrôle on obtient le couple moteur désiré.

Selon le mode de réalisation de la figure 10, le contrôleur bas niveau (CTRL BN) détermine une consigne de fermeture $IVC^{sp}$ de la soupape d'admission et une consigne d'ouverture $IVO^{sp}$ de la soupape d'admission. Selon l'invention, quand la pression admission est trop lente, le contrôleur ajuste la commande de l'actionneur "Camless" (uniquement l'angle d'IVC, qui a un impact beaucoup plus important sur la masse d'air que l'angle d'IVO) pour accélérer le remplissage des cylindres.

En outre, selon le mode de réalisation de la figure 10, le contrôleur bas niveau (CTRL BN) peut également contrôler la pression d'admission $P_{man}$ en contrôlant la vanne papillon (4) et la soupape de décharge (7) en fonction de la consigne de pression d'admission $P_{man}^{sp}$ déterminée à partir de cartographies du moteur.

Exemples d'application

Plusieurs essais ont été menés d'une part pour illustrer la bonne représentativité du modèle (figures 8 et 9) et d'autre part pour montrer les résultats obtenus avec le procédé selon l'invention (figures 11 à 14). Pour ces essais, l'actionneur non directement actionné par une came considéré est un actionneur électromagnétique.

Les figures 8a) à 8d) présentent l'erreur entre le modèle de remplissage et les données de référence pour les quatre configurations du système d'air : 1 soupape / 2 cylindres, 2 soupapes / 2 cylindres, 2 soupapes / 4 cylindres et 2 soupapes / 4 cylindres. Pour chaque configuration, l'erreur relative est majoritairement inférieure à 10%. Ces résultats montrent la bonne précision du modèle de remplissage selon l'invention pour toutes les configurations du moteur.

Par ailleurs, le modèle de remplissage permet de prendre en compte le balayage d'air frais dans le cas de fort croisement à bas régime. La figure 9 présente des lois de levée de soupapes permettant un balayage d'air frais vers l'échappement. Ici, les deux soupapes d'admission sont dissociées et ne sont pas ouvertes en même temps. En effet, la soupape d'admission du conduit d'injection est fixe (courbe $C_{man}$ en gras) alors que la levée de la soupape d'admission de l'autre conduit d'admission est variable : variation d'IVO à durée d'ouverture fixe (courbe $C_{man}$ en gris).

Le balayage permet d'augmenter le couple à bas régime en augmentant le débit passant à travers la turbine et en balayant les gaz résiduels de la chambre de combustion. Selon l'invention, la procédé de contrôle du remplissage (donc du couple) selon l'invention est basée sur une variation de la fermeture de la soupape admission durant les transitoires. Le couple est largement accéléré.

L'effet de balayage est donc très limité durant les transitoires. Dans la suite de cette description, on ne donne pas de résultats de simulation faisant varier l'IVO en transitoire, les résultats n'étant pas pertinents.

Les premiers essais du procédé de contrôle selon l'invention consistent en des transitoires de charge à iso-régime. Ils correspondent à une forte demande de couple du conducteur.

Les figures 11a) à 11d) présentent les résultats pour un régime de 2000 tr/min. Cette simulation est la même que celle présentée aux figures 4. Ici, on compare la stratégie de référence (ref) selon l'art antérieur à la stratégie de coordination (inv) selon l'invention. La figure 11a) présente la demande de couple et la réponse obtenue pour les deux stratégies. On voit clairement l'apport de la stratégie dynamique sur la réponse en couple. Les trois autres figures 11b) à 11c) permettent d'expliquer ceci. La figure 11b) présente la masse d'air aspirée. La consigne $m_{asp}^{sp}$, l'estimation $m_{asp}^{est}$ donnée par le modèle de remplissage ainsi que la valeur $m_{asp}^{mes}$ donnée par un capteur de débit à l'entrée du moteur sont présentées pour les deux stratégies. On voit clairement que la masse d'air aspirée est accélérée dans le cas de la stratégie dynamique selon l'invention (la masse d'air est l'image du couple). On peut noter également la bonne représentativité du modèle de remplissage qui est assez proche de la valeur donnée par le capteur (notons que la valeur donnée par le capteur de débit durant les transitoires n'est pas cohérente avec le modèle puisqu'il faut considérer le remplissage du volume admission - pipe et répartiteur). Les deux figures 11c) et 11d) présentent la pression admission $P_{man}$ et le moment de fermeture $\theta_{ivc}$ de la soupape admission (IVC). La pression admission $P_{man}$ a un temps de réponse assez important du fait de l'inertie du turbocompresseur. La stratégie de coordination selon l'invention permet de calculer une position d'IVC nécessaire pour compenser la lenteur de la pression. C'est ce que l'on voit sur la figure 11d) : l'IVC se rapproche du point mort bas (PMB) de façon à maximiser le volume disponible pour le remplissage. En plus d'avoir un bénéfice direct sur la masse d'air, cela permet également d'accélérer la pression admission du fait d'un plus fort débit passant à travers la turbine. C'est ce double effet qui permet d'améliorer les performances en transitoire.

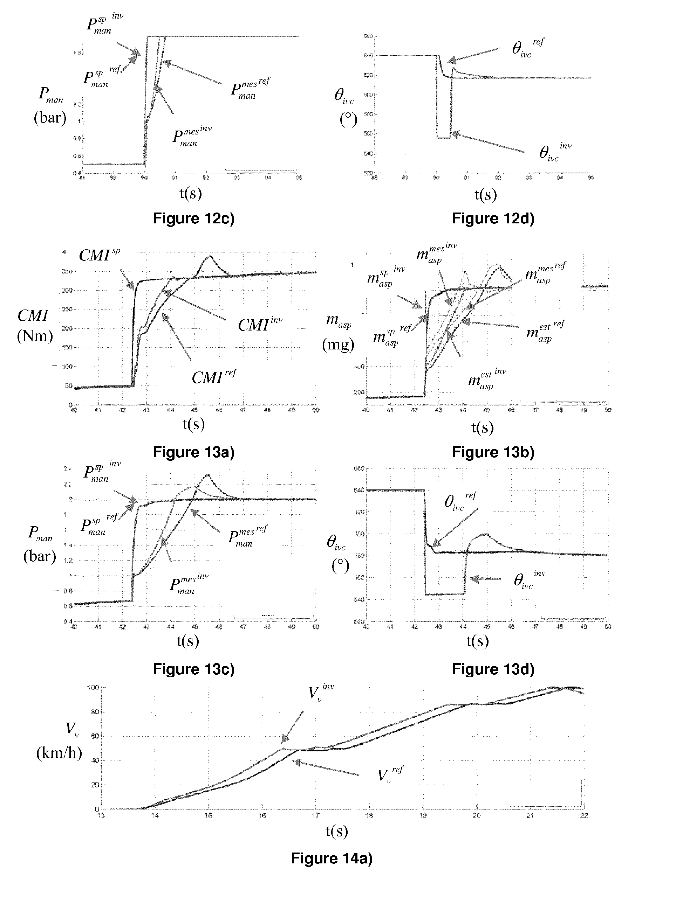

Les figures 12a) à 12d) présentent les résultats pour un régime de 4000 tr/min. Les analyses du cas à 2000 tr/min sont valables également à 4000 tr/min. En effet, la stratégie dynamique selon l'invention permet d'accélérer la réponse en couple du système. On voit bien sur la figure 11d) la modification de la position de l'IVC durant le transitoire. Ici encore, on cherche à maximiser le remplissage, ce qui a pour effet additionnel d'accélérer le turbocompresseur. L'amélioration de la réponse en couple est moins importante à 4000 tr/min qu'à 2000 tr/min car le temps de réponse du turbocompresseur est moins important à ce régime.

Notons qu'à 2000 tr/min comme à 4000 tr/min, l'IVC ne se place pas sur le point mort bas (540 °) durant le transitoire, ce qui pourtant correspondrait au volume maximum du cylindre. Ceci s'explique par la prise en compte des effets inertiels dans la commande selon l'invention. On voit clairement que l'IVC est plus tardif à 4000 tr/min qu'à 2000 tr/min durant le transitoire.

Un autre essai consiste en un transitoire véhicule. Il s'agit d'un test de performance caractéristique : passage de 80 à 120 km/h en 6ème vitesse. Sur ce transitoire, à la différence des deux précédents, le régime moteur évolue au cours de l'essai. Les figures 13a) à 13d) présentent les résultats sur le couple, la masse d'air aspirée, la pression admission et l'angle d'IVC. Ici encore, on voit l'amélioration de la réponse en couple apportée par la stratégie dynamique selon l'invention. Sur cet essai, on voit que la pression admission fait un dépassement durant le transitoire dû aux réglages de la boucle de régulation. Pour la stratégie de référence selon l'art antérieur, ce dépassement se répercute directement sur la masse d'air aspirée et donc sur le couple, ce qui peut être problématique pour l'agrément de conduite. Les résultats de la stratégie dynamique montrent que l'IVC compense la lenteur de pression au début du transitoire, mais ralentit également le remplissage lors du dépassement de pression (angle d'IVC au dessus de sa valeur de référence). Ceci permet d'accélérer la réponse en couple dans un premier temps, mais aussi d'éviter le dépassement et donc d'améliorer l'agrément. La stratégie de contrôle est donc stabilisante pour la pression admission.

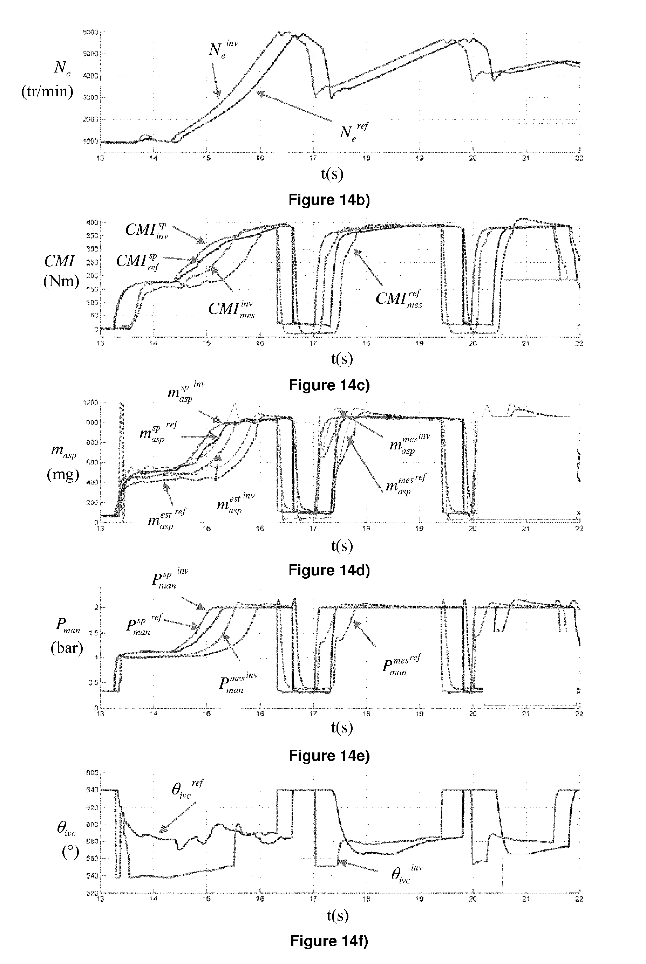

Le troisième type d'essai effectué consiste en une accélération véhicule de 0 à 100 km/h. Les figures 14a) à 14f) présentent les résultats de vitesse du véhicule, régime, couple, masse d'air aspirée, pression et angle d'IVC. Cet essai permet de comparer les résultats de performance obtenus sur le véhicule pour les deux stratégies : selon l'art antérieur et selon l'invention. On constate que la stratégie dynamique selon l'invention cherche à compenser la pression sur chaque demande de couple (correspondant à un passage de vitesse). Étant donné que ces transitoires apparaissent à fort régime, le gain apporté par la stratégie est plus limité. Néanmoins, en regardant la figure 14a), on constate un gain de l'ordre de 5% sur le temps réalisé pour passer de 0 à 100 km/h grâce à la stratégie de contrôle.

## Revendications

1. Procédé de contrôle d'un moteur thermique comportant au moins un cylindre équipé d'au moins une soupape d'admission (2) entraînée par un actionneur non directement actionné par une came (3), **caractérisé en ce qu'**on réalise les étapes suivantes :

   a) on acquiert des consignes d'angle d'ouverture $\theta_{ivo}^{sp}$ et de fermeture $\theta_{ivc}^{sp}$ de ladite soupape d'admission (2) ;

   b) on construit un modèle de remplissage dudit cylindre (1), ledit modèle reliant la masse d'air aspiré $m_{asp}$ par le cylindre à l'angle d'ouverture $\theta_{ivo}$ de ladite soupape d'admission (3) et à l'angle de fermeture $\theta_{ivc}$ de ladite soupape d'admission ;

   c) on détermine une consigne masse d'air aspiré $m_{asp}^{sp}$ au moyen dudit modèle de remplissage et desdites consignes d'angles d'ouverture $\theta_{ivo}^{sp}$ et de fermeture $\theta_{ivc}^{sp}$ de ladite soupape d'admission (2) ;

   d) on inverse ledit modèle de remplissage de manière à relier ledit angle de fermeture $\theta_{ivc}$ de ladite soupape d'admission (2) à la masse d'air aspiré $m_{asp}$ et audit angle d'ouverture $\theta_{ivo}$ de ladite soupape d'admission (2) ;

   e) on détermine une consigne coordonnée de l'angle de fermeture $\theta_{ivc}^{coord}$ de ladite soupape d'admission (2) au moyen dudit modèle de remplissage inversé, de ladite consigne de masse d'air aspiré $m_{asp}^{sp}$ et de ladite consigne d'angle d'ouverture $\theta_{ivo}^{sp}$ de ladite soupape d'admission (2) ; et

   f) on contrôle ledit actionneur non directement actionné par une came (3) au moyen de ladite consigne coordonnée $\theta_{ivc}^{coord}$ de fermeture de ladite soupape d'admission (2) et de ladite consigne d'ouverture $\theta_{ivo}^{sp}$ de ladite soupape d'admission (2).

2. Procédé selon la revendication 1, dans lequel on acquiert lesdites consignes d'angle d'ouverture $\theta_{ivo}^{sp}$ et de fermeture $\theta_{ivc}^{sp}$ de ladite soupape d'admission (2), en mettant en oeuvre les étapes suivantes :

   i) on acquiert une consigne de couple moyen indiqué $CMI^{sp}$ dudit moteur ; et

   ii) on détermine lesdites consignes d'angle d'ouverture $\theta_{ivo}^{sp}$ et de fermeture $\theta_{ivc}^{sp}$ de ladite soupape d'admission (2) au moyen de cartographies dudit moteur et de ladite consigne de couple moyen indiqué $CMI^{sp}$.

3. Procédé selon l'une des revendications précédentes, dans lequel on construit ledit modèle de remplissage au moyen d'une relation du type :

$$m_{asp}^{sp} = \alpha_1(N_e, P_{man}^{sp}) \frac{P_{man}^{sp}}{R \cdot T_{man}} V_{cyl}(\theta_{ivc}^{sp} - \delta_{ivc}(N_e)) - \alpha_2(N_e, P_{man}^{sp}) OF(N_e, \theta_{ivo}^{sp})$$ avec R la

constante des gaz parfaits, $V_{cyl}(\theta)$ le volume du cylindre (1) pour un angle de vilebrequin $\theta$, OF le facteur de croisement, $\delta_{ivc}(N_e)$ un terme additif fonction du régime moteur $N_e$ pour la prise en compte de phénomènes physiques,

$P_{man}^{sp}$ la consigne de pression d'admission, $T_{man}$ la température d'admission et $\alpha_1, \alpha_2$ des paramètres de calibration.

4. Procédé selon les revendications 2 et 3, dans lequel ladite consigne $P_{man}^{sp}$ de pression d'admission est déterminée au moyen d'une cartographie fonction de ladite consigne de couple moyen indiqué $CMI^{sp}$.

5. Procédé selon la revendication 4, dans lequel on contrôle ladite pression d'admission au moyen de ladite consigne $P_{man}^{sp}$ en contrôlant une vanne papillon (4) équipant le circuit d'admission dudit moteur et/ou une soupape de décharge (7) équipant le circuit d'échappement dudit moteur.

6. Procédé selon l'une des revendications 3 à 5, dans lequel lesdits paramètres de calibration $\alpha_1, \alpha_2$ et/ou ledit terme additif $\delta_{ivc}(N_e)$ sont déterminés au moyen de mesures expérimentales.

7. Procédé selon la revendication 6, dans lequel lesdits paramètres de calibration $\alpha_1, \alpha_2$ sont déterminés au moyen d'une régression linéaire à partir desdites mesures expérimentales.

8. Procédé selon les revendications 5 et 6, dans lequel ledit terme additif $\delta_{ivc}(N_e)$ est déterminé au moyen d'une optimisation non-linéaire à partir desdites mesures expérimentales.

9. Procédé selon l'une des revendications 3 à 8, dans lequel ledit volume du cylindre est défini par une relation du type :

$$V_{cyl}(\theta) = V_{min} + \frac{1}{2} V_{min} \cdot (\varepsilon - 1) \cdot \left( R_{bm} + 1 - \cos(\theta) - \sqrt{R_{bm}^2 - \sin^2(\theta)} \right)$$ avec $\theta$ l'angle du vilebrequin, $V_{min}$ le volume mort, $R_{bm}$ le rapport bielle sur manivelle et $\varepsilon$ le taux de compression.

10. Procédé selon l'une des revendications 3 à 9, dans lequel on construit l'inversion dudit modèle de remplissage au moyen d'un système d'équations du type :

$$\begin{cases} \theta_{ivc}^{coord} = \arccos(X) \cdot \dfrac{180}{\pi} + 360 + \delta_{ivc}(N_e) \\ \theta_{ivc}^{coord} = 720 - \arccos(X) \cdot \dfrac{180}{\pi} + \delta_{ivc}(N_e) \end{cases},$$

avec :

$$X = \frac{R_{bm}^2 - 1 - \lambda^2}{2\lambda},$$

$$\lambda = \left(\frac{V_{cyl}^{sp}}{V_{\min}} - 1\right) \cdot \frac{2}{\varepsilon - 1} - R_{bm} - 1, \ \ V_{cyl}^{sp} = \frac{R \cdot T_{man}}{\alpha_1(N_e, P_{man}) \cdot P_{man}} \left(m_{asp}^{sp} + \alpha_2(N_e, P_{man})OF(N_e, \theta_{ivo}^{sp})\right)$$

et $P_{man}$ étant la pression d'admission mesurée, la première équation de ce système d'équations déterminant une consigne coordonnée $\theta_{ivc}^{coord}$ pour une fermeture de ladite soupape d'admission avant le point mort bas, la deuxième équation de ce système d'équations déterminant une consigne coordonnée $\theta_{ivc}^{coord}$ pour une fermeture de ladite soupape d'admission après le point mort bas.

**Figure 1**

**Figure 2**

CMI$^{sp}$

N$_e$

MAP

$\theta_{ivc}^{sp}$

$\theta_{ivo}^{sp}$

P$_{man}^{sp}$

CTRL
BN

CTRL
Camless

CTRL
$P_{man}$

IVC$^{sp}$

IVO$^{sp}$

pap$^{sp}$

WG$^{sp}$

**Art antérieur
Figure 3**

$P_{man}$ (bar)

t(s)

**Art antérieur
Figure 4a)**

$\theta$ (°)

IVC

IVO

t(s)

**Art antérieur
Figure 4b)**

$CMI^{sp}$

CMI
(Nm)

$CMI^{mes}$

t(s)

**Art antérieur
Figure 4c)**

Figure 5a)

Figure 5b)

Figure 6

## Figure 7

Figure 8a)

Figure 8b)

Figure 8c)

Figure 8d)

$C_{exh}$

$C_{man}$

## Figure 9

Figure 10

Figure 11a)

Figure 11b)

Figure 11c)

Figure 11d)

Figure 12a)

Figure 12b)

**Figure 12c)**

**Figure 12d)**

**Figure 13a)**

**Figure 13b)**

**Figure 13c)**

**Figure 13d)**

**Figure 14a)**

Figure 14b)

Figure 14c)

Figure 14d)

Figure 14e)

Figure 14f)

EP 2 743 483 A1

Europäisches
Patentamt

European
Patent Office

Office européen
des brevets

**RAPPORT DE RECHERCHE EUROPEENNE**

Numéro de la demande

EP 13 30 6662

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | VAN NIEUWSTADT ET AL: "Air Charge Estimation in Camless engines", SAE TECHNICAL PAPERS SERIES, WARRENDALE, PA, no. 2001-01-0581, 5 mars 2001 (2001-03-05), pages 1-8, XP002713889, DOI: 10.4271/2001-01-0581 * le document en entier * ----- | 1-10 | INV. F02D41/00 F02D13/02 |
| A | DE 10 2008 037639 A1 (GM GLOBAL TECH OPERATIONS INC [US]) 14 mai 2009 (2009-05-14) * alinéas [0029] - [0053] * * figures 3-5 * ----- | 1-10 | |
| A | EP 2 211 043 A1 (INST FRANCAIS DU PETROLE [FR]) 28 juillet 2010 (2010-07-28) * alinéas [0027] - [0047] * ----- | 1-10 | |

DOMAINES TECHNIQUES RECHERCHES (IPC)

F02D

Le présent rapport a été établi pour toutes les revendications

| Lieu de la recherche | Date d'achèvement de la recherche | Examinateur |
|---|---|---|
| La Haye | 17 mars 2014 | Röttger, Klaus |

**ANNEXE AU RAPPORT DE RECHERCHE EUROPEENNE
RELATIF A LA DEMANDE DE BREVET EUROPEEN NO.**

EP 13 30 6662

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2014

| Document brevet cité au rapport de recherche | Date de publication | Membre(s) de la famille de brevet(s) | Date de publication |
|---|---|---|---|
| DE 102008037639 A1 | 14-05-2009 | CN 101476509 A<br>DE 102008037639 A1<br>US 2009048761 A1 | 08-07-2009<br>14-05-2009<br>19-02-2009 |
| EP 2211043 A1 | 28-07-2010 | EP 2211043 A1<br>FR 2941266 A1<br>JP 2010169095 A<br>US 2010180876 A1 | 28-07-2010<br>23-07-2010<br>05-08-2010<br>22-07-2010 |

EPO FORM P0460

Pour tout renseignement concernant cette annexe : voir Journal Officiel de l'Office européen des brevets, No.12/82